# EUROPEAN PATENT SPECIFICATION

(11) **EP 2 853 735 B1**
(45) Date of publication and mention of the grant of the patent: **21.02.2018**
(21) Application number: 14182992.9
(22) Date of filing: 01.09.2014
(51) Int. Cl.: F03D 13/20, E04G 3/24

(54) **Mechanical structure for equipment disposed in a wind turbine tower**
Mechanische Struktur für in einem Windturbinenturm angeordnete Ausrüstung
Structure mécanique pour un équipement disposé dans une tour de turbine éolienne

(30) Priority: 29.09.2013 CN 201320607462 U
(43) Date of publication of application: 01.04.2015
(73) Proprietor: Siemens Aktiengesellschaft, 80333 München (DE)
(72) Inventor: Hansen, Leif Vestergaard, 8800 Viborg (DK); Sandberg, Jan, 8765 Klovborg (DK)

(56) References cited:
- EP-A2- 2 431 609
- WO-A1-97/28331
- WO-A1-2009/155927
- US-A1- 2013 174 508

## Description

### Technical field

The present application relates to a mechanical structure, in particular to a mechanical structure for equipment disposed in a wind turbine tower. The present application also relates to a wind power generator comprising the mechanical structure.

### Background art

In a wind power generator, the power unit and/or transformer unit is generally located at the bottom of the wind turbine tower, and mounted on a platform connected to a flange of the wind turbine tower.

EP2431609A2 describes a fixed structure for a horizontal axis wind turbine that comprises a base fitting having an inner flange and that is fastened to the base. A tower having a inner flange on the bottom end thereof that is aligned with and connected to the top side of the inner flange of the base fitting, and a frame that is located inside the tower and that has a part mounting section and a leg section that supports the part mounting section above it. An inside end section that protrudes further inward than the inside end of the inner flange of the tower is provided on the inside end of the inner flange of the base fitting and the leg section is placed on this inside end such that the frame is supported by the base fitting.

Owing to restrictions imposed by equipment weight and platform size, the power unit and/or transformer unit must be transported separately from the platform. The platform generally consists of multiple metal crossbeams and flat plates, etc., which are finally assembled together.

WO97/28331A1 relates to an adjustable working platform construction suitable for being used in distillation columns and the like, whereby the working platform can be supported on rings present on the inner side of teh column wall. The working platform is built up of a system of spokes which are connected to a central plate, whereby two diametrically opposed first spokes are fixedly connected to said plate and at least two pairs of second spokes positioned on either side of said first spokes are pivotally connected to said plate, and whereby two third spokes, which are arranged in diametrically opposed relationship, are detachably accommodated in receiving holes in said central plate, whereby said system of spokes supports cover plates, which are shaped to cover the entire column section.

US2013/0174508A1 describes a modular platform assembly for a wind turbine tower including a core platform sub-assembly having an underlying structural support grid. A plurality of platform extension panels are disposed circumferentially around at least a portion of a perimeter of the core platform sub-assembly. Support extensions are configured on the support grid at a plurality of circumferential positions around the core platform sub-assembly, with the platform extension panels supported by the support extension. The support extensions are mountable to a wall within a wind turbine tower and are variably positional on the support grid so that at to vary the effective diameter of the support grid.

The process of on-site assembly is generally quite complicated and time-consuming.

### Content of the application

An object of the present application is to provide a mechanical structure for equipment disposed in a wind turbine tower which is simple to install and convenient to transport. Such a mechanical structure comprises a first platform and a post, wherein the first platform is fixed to a flange of the wind turbine tower by means of the post. The first platform comprises a first stationary section and two first folding sections, wherein the two first folding sections are connected to the first stationary section and can be fixed to the first stationary section.

According to one aspect of the present application, the mechanical structure further comprises a second platform fixed to the flange of the wind turbine tower by means of the post. The second platform is located beneath the first platform, and comprises a second stationary section and two second folding sections, wherein the two second folding sections are connected to the second stationary section and can be fixed to the second stationary section. The mechanical structure with two platforms can have a power unit and a transformer unit mounted on different platforms.

According to another aspect of the present application, a power unit is mounted on the first stationary section.

According to another aspect of the present application, a transformer unit is mounted on the second stationary section.

According to another aspect of the present application, the two first folding sections are connected to the first stationary section by means of hinges and can be fixed to the first stationary section by bolts, while the two second folding sections are connected to the second stationary section by means of hinges and can be fixed to the second stationary section by bolts.

Another object of the present application is to provide a wind power generator comprising the mechanical structure.

### Description of the accompanying drawings

The accompanying drawings below are intended merely to illustrate and explain the present application schematically, without defining the scope thereof.
Fig. 1 shows schematically a main view of the mechanical structure for equipment disposed in a wind turbine tower according to the present application;
Fig. 2 shows schematically a view from the left of the mechanical structure for equipment disposed in a wind turbine tower according to the present application;
Fig. 3 shows schematically a view from the right of the mechanical structure for equipment disposed in a wind turbine tower according to the present application;
Fig. 4 shows schematically a main view of the first platform when the first folding sections have been unfolded;
Fig. 5 shows schematically a main view of the second platform when the second folding sections have been unfolded;
Fig. 6 shows schematically a three-dimensional drawing of part of the mechanical structure;
Fig. 7 shows schematically a magnified local view A in Fig. 6.

### Reference labels:

- 11: first platform
- 111: first stationary section
- 112, 113: first folding section
- 12: second platform
- 121: second stationary section
- 122, 123: second folding section
- 13: flange
- 14: post
- 15: hinge
- 1111: hole
- 1131: hole
- 1132: end

### Particular embodiments

In order that the technical features, object and effects of the present application may be understood more clearly, particular embodiments thereof are now explained with reference to the accompanying drawings. In the drawings, identical labels indicate identical components or components with similar structure but the same function; where there is more than one component with the same structure or function, only one is drawn schematically, or only one is labelled. To make the drawings appear uncluttered, only those parts relevant to the present application are shown schematically therein, but these parts by no means represent the actual structure of the application as a product. The terms "connect" and "fix" as used herein indicate direct "connection" and "fixing", or "connection" and "fixing" via a third element.

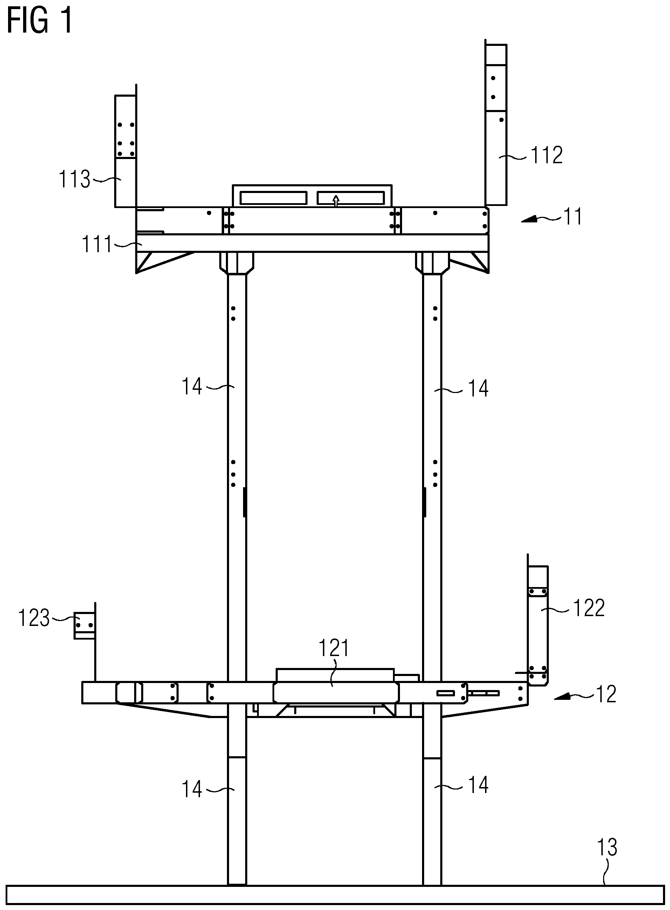

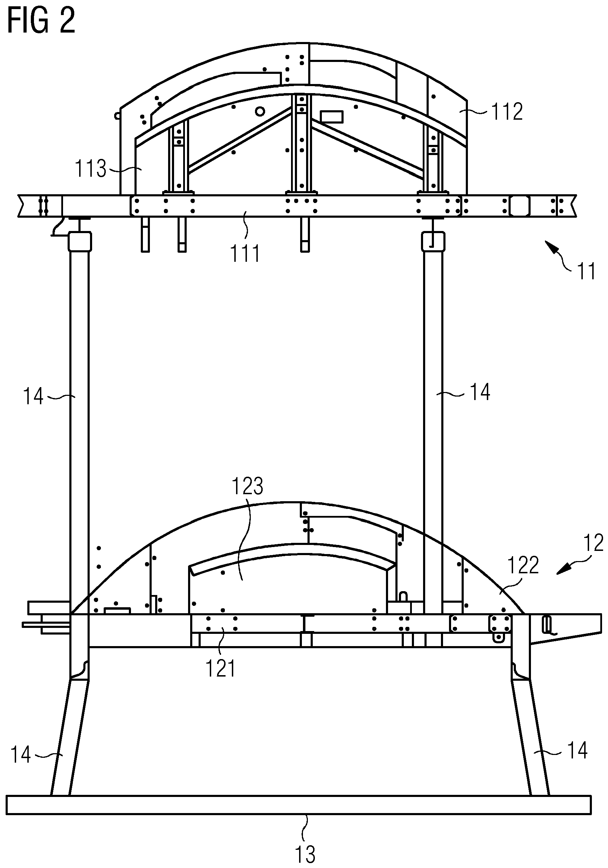

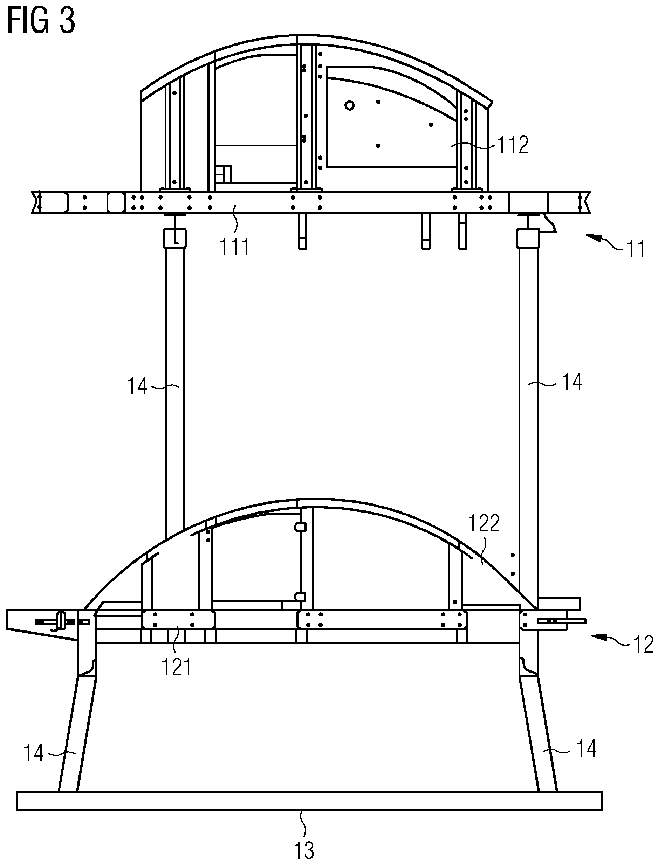

As Figs. 1 to 3 show, a mechanical structure for equipment disposed in a wind turbine tower has a first platform 11 and four posts 14, wherein the first platform 11 is fixed to a flange 13 of the wind turbine tower by means of the four posts 14. Those skilled in the art will understand that the number of posts 14 may be increased or decreased depending on the actual circumstances, but comprises at least one post 14. The first platform 11 comprises a first stationary section 111 and two first folding sections 112 and 113, wherein the two first folding sections 112 and 113 are connected to the first stationary section 111 and can be fixed to the first stationary section 111. A power unit may be mounted on the first stationary section 111.

According to another embodiment of the present application, the mechanical structure may further comprise a second platform 12 fixed to the flange 13 of the wind turbine tower by means of a post 14. The second platform 12 is located beneath the first platform 11, and comprises a second stationary section 121 and two second folding sections 122 and 123, wherein the two second folding sections 122 and 123 are connected to the second stationary section 121 and can be fixed to the second stationary section 121. A transformer unit may be mounted on the second stationary section 121.

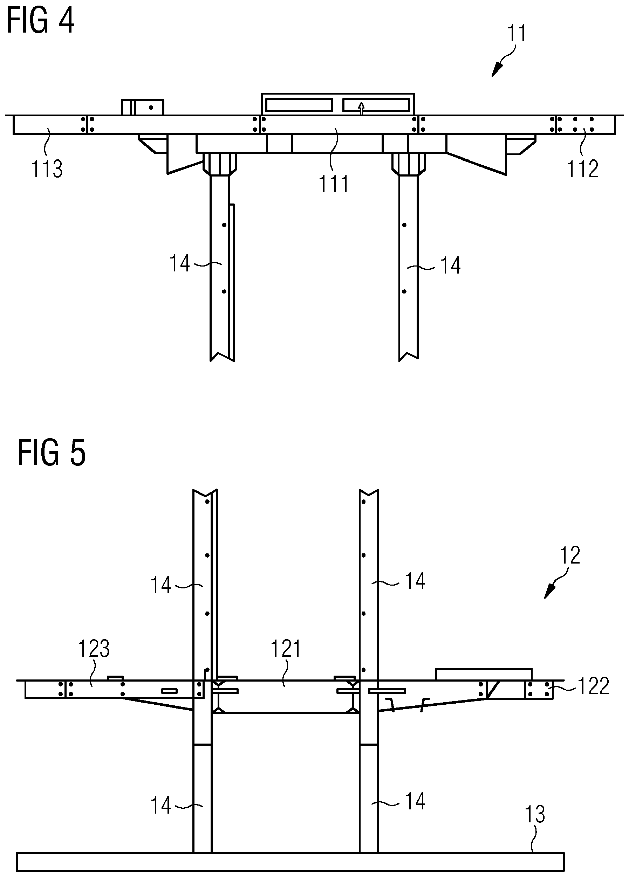

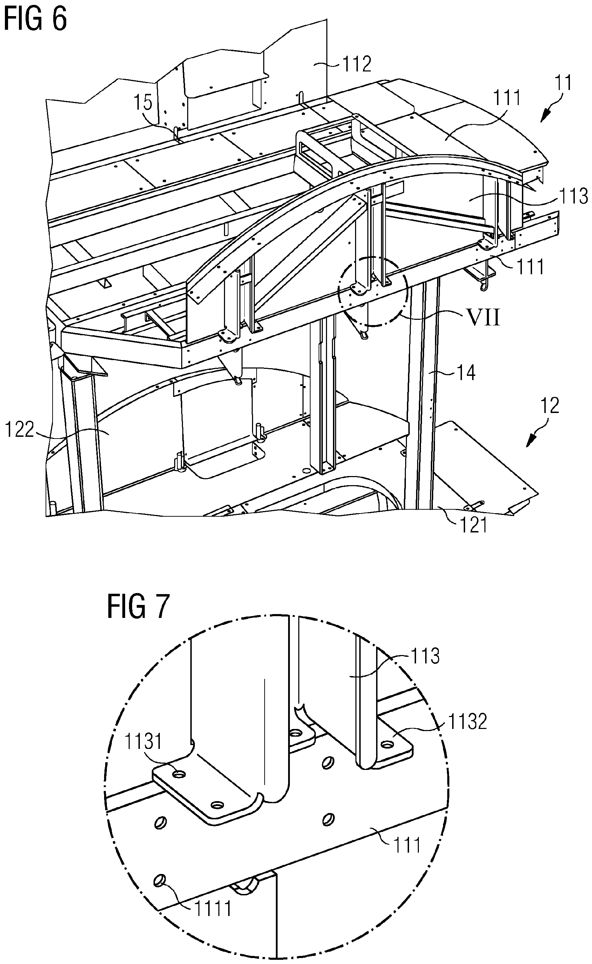

When the first platform 11 is unfolded as shown in Fig. 4, the two first folding sections 112 and 113 are connected to the first stationary section 111 by means of the hinges 15 shown in Fig. 6, and may be fixed to the first stationary section 111 by bolts (not shown). When the second platform 12 is unfolded as shown in Fig. 5, the two second folding sections 122 and 123 are connected to the second stationary section 121 by means of the hinges 15 shown in Fig. 6, and may be fixed to the second stationary section 121 by bolts (not shown).

When the platforms are unfolded and fixed, the weight on the two first folding sections 112 and 113 and the two second folding sections 122 and 123 is supported by the stationary sections and by crossbeams beneath the folding sections, which can bear a weight of as much as 500 kg. The folding sections can be folded temporarily during transportation, with no need to be removed from the stationary sections, facilitating not just transportation but also subsequent installation. Fig. 7 shows the details of how the stationary section is fixed to the crossbeam beneath the folding section, wherein the crossbeam beneath the folding section 113 has holes 1131 (only one hole has been labelled) at the end 1132 thereof used for fixing, while a crossbeam beneath the stationary section 111 has holes 1111 (only one hole has been labelled) corresponding to the holes 1131. When the platform is unfolded, bolts (not shown) can pass through the holes 1111 and the corresponding holes 1131, and nuts (not shown) can then be used to fix the stationary section 111 to the folding section 113. This method of fixing is similarly suitable for fixing other stationary sections to crossbeams beneath folding sections in the mechanical structure. Those edges of the folding sections which are not connected to the stationary sections may have profiles corresponding to the inside wall of the wind turbine tower, so that the gaps between the folding sections and the inside wall of the wind turbine tower are sufficiently small when the platforms are unfolded. The hinges used to connect the edges of the stationary sections to the edges of the folding sections may be temporary hinges. Temporary hinges may be removed after the stationary sections are fixed to the folding sections. A wind power generator which comprises the above mechanical structure is convenient to transport and assemble.

It should be understood that although the description herein is based on various embodiments, it is certainly not the case that each embodiment includes just one independent technical solution. This method of presentation is adopted herein solely for the sake of clarity. Those skilled in the art should consider the Description in its entirety. The technical solutions in the various embodiments may also be suitably combined to form other embodiments which can be understood by those skilled in the art.

The term "schematic" as used herein means "serving as a real example, an example or an illustration". No drawing or embodiment described herein as "schematic" should be interpreted as being a more preferred or a more advantageous technical solution.

The above embodiments are merely particular schematic embodiments of the present application, and are by no means intended to define the scope thereof. Any equivalent changes, amendments or combinations made by those skilled in the art without deviating from the concept and principle of the present application should be included in the scope of protection thereof.

## Claims

1. A wind power generator, comprising a mechanical structure to dispose equipment in a wind turbine tower, wherby the mechanical structure comprises:
a first platform (11) and a post (14), wherein the first platform (11) is fixed to a flange (13) of the wind turbine tower by means of the post (14), **characterized in that**;
the first platform (11) comprises a first stationary section (111) and two first folding sections (112, 113), wherein the two first folding sections (112, 113) are connected to the first stationary section (111) and can be fixed to the first stationary section (111).

2. A wind power generator, comprising the mechanical structure as claimed in claim 1, **characterized in that** the mechanical structure further comprises a second platform (12) fixed to the flange (13) of the wind turbine tower by means of the post (14);
the second platform (12) is located beneath the first platform (11), and comprises a second stationary section (121) and two second folding sections (122, 123), wherein the two second folding sections (122, 123) are connected to the second stationary section (121) and can be fixed to the second stationary section (121).

3. A wind power generator, comprising the mechanical structure as claimed in claim 1, **characterized in that** a power unit is mounted on the first stationary section (111).

4. A wind power generator, comprising the mechanical structure as claimed in claim 1, **characterized in that** a transformer unit is mounted on the second stationary section (121).

5. A wind power generator, comprising the mechanical structure as claimed in claim 1, **characterized in that** the two first folding sections (112, 113) are connected to the first stationary section (111) by means of hinges (15) and can be fixed to the first stationary section (111) by bolts, while the two second folding sections (122, 123) are connected to the second stationary section (121) by means of hinges (15) and can be fixed to the second stationary section (121) by bolts.

## Patentansprüche

1. Windkraftgenerator mit einer mechanischen Konstruktion zum Anordnen von Ausrüstung in einem Windturbinenturm, wobei die mechanische Konstruktion Folgendes umfasst:
eine erste Plattform (11) und einen Pfosten (14), wobei die erste Plattform (11) mit Hilfe des Pfostens (14) an einem Flansch (13) des Windturbinenturms fixiert ist, **dadurch gekennzeichnet, dass**
die erste Plattform (11) einen ersten festen Abschnitt (111) und zwei erste Klappabschnitte (112, 113) umfasst, wobei die beiden ersten Klappabschnitte (112, 113) mit dem ersten festen Abschnitt (111) verbunden sind und an dem ersten festen Abschnitt (111) fixiert sein können.

2. Windkraftgenerator mit der mechanischen Konstruktion nach Anspruch 1, **dadurch gekennzeichnet, dass** die mechanische Konstruktion ferner eine zweite Plattform (12) umfasst, die mit Hilfe des Pfostens (14) an dem Flansch (13) des Windturbinenturms fixiert ist,
sich die zweite Plattform (12) unterhalb der ersten Plattform (11) befindet und einen zweiten festen Abschnitt (121) und zwei zweite Klappabschnitte (122, 123) umfasst, wobei die beiden zweiten Klappabschnitte (122, 123) mit dem zweiten festen Abschnitt (121) verbunden sind und an dem zweiten festen Abschnitt (121) fixiert sein können.

3. Windkraftgenerator mit der mechanischen Konstruktion nach Anspruch 1, **dadurch gekennzeichnet, dass** auf dem ersten festen Abschnitt (111) ein Stromaggregat angebracht ist.

4. Windkraftgenerator mit der mechanischen Konstruktion nach Anspruch 1, **dadurch gekennzeichnet, dass** auf dem zweiten festen Abschnitt (121) eine Transformatoreinheit angebracht ist.

5. Windkraftgenerator mit der mechanischen Konstruktion nach Anspruch 1, **dadurch gekennzeichnet, dass** die beiden ersten Klappabschnitte (112, 113) mit Hilfe von Scharnieren (15) mit dem ersten festen Abschnitt (111) verbunden sind und über Bolzen an dem ersten festen Abschnitt (111) fixiert sein können, während die beiden zweiten Klappabschnitte (122, 123) mit Hilfe von Scharnieren (15) mit dem zweiten festen Abschnitt (121) verbunden sind und über Bolzen an dem zweiten festen Abschnitt (121) fixiert sein können.

## Revendications

1. Générateur d'éolienne, comprenant une structure mécanique pour disposer un équipement dans un mât d'éolienne, moyennant quoi la structure mécanique comprend :
une première plate-forme (11) et un montant (14), dans lequel la première plate-forme (11) est fixée à un rebord (13) du mât d'éolienne au moyen du montant (14), **caractérisé en ce que**
la première plate-forme (11) comprend une première section fixe (111) et deux premières sections repliables (112, 113), dans lequel les deux premières sections repliables (112, 113) sont raccordées à la première station fixe (111) et peuvent être fixées à la première station fixe (111).

2. Générateur d'éolienne, comprenant la structure mécanique selon la revendication 1, **caractérisé en ce que** la structure mécanique comprend en outre une deuxième plate-forme (12) fixée au rebord (13) du mât d'éolienne au moyen du montant (14) ;
la deuxième plate-forme (12) est située en dessous de la première plate-forme (11), et comprend une deuxième section fixe (121) et deux deuxièmes sections repliables (122, 123), dans lequel les deux deuxièmes sections repliables (122, 123) sont raccordées à la deuxième section fixe (121) et peuvent être fixées à la deuxième section fixe (121).

3. Générateur d'éolienne, comprenant la structure mécanique selon la revendication 1, **caractérisé en ce qu'**une unité d'alimentation est montée sur la première section fixe (111).

4. Générateur d'éolienne, comprenant la structure mécanique selon la revendication 1, **caractérisé en ce qu'**une unité formant transformateur est montée sur la deuxième section fixe (121).

5. Générateur d'éolienne, comprenant la structure mécanique selon la revendication 1, **caractérisé en ce que** les deux premières sections repliables (112, 113) sont raccordées à la première section fixe (111) au moyen de charnières (15) et peuvent être fixées à la première section fixe (111) par des boulons, tandis que les deux deuxièmes sections repliables (122, 123) sont raccordées à la deuxième section fixe (121) au moyen de charnières (15) et peuvent être fixées à la deuxième section fixe (121) par des boulons.
